# EUROPÄISCHE PATENTSCHRIFT

(11) **EP 4 251 897 B1**
(45) Veröffentlichungstag und Bekanntmachung des Hinweises auf die Patenterteilung: **28.08.2024**
(21) Anmeldenummer: 21815943.2
(22) Anmeldetag: 16.11.2021
(51) Int. Cl.: F16D 48/06

(54) **VERFAHREN ZUM SCHALTEN EINES ZWEIRADS**
METHOD FOR SHIFT CHANGE FOR A TWO-WHEELED VEHICLE
PROCÉDÉ DE CHANGEMENT DE VITESSE POUR UN VÉHICULE À DEUX ROUES

(30) Priorität: 27.11.2020 DE 102020214994
(43) Veröffentlichungstag der Anmeldung: 04.10.2023
(73) Patentinhaber: Robert Bosch GmbH, 70442 Stuttgart (DE)
(72) Erfinder: OTTO, Stephan, 71287 Weissach (DE); BERKEMER, Juergen, 71665 Vaihingen/Enz (DE)
(86) Internationale Anmeldenummer: PCT/EP2021/081769
(87) Internationale Veröffentlichungsnummer: WO 2022/112050

(56) Entgegenhaltungen:
- EP-A1- 2 713 079
- EP-A2- 1 777 431
- EP-A2- 1 936 224

## Beschreibung

Die Erfindung betrifft ein Verfahren zum Schalten eines Zweirads.

### Stand der Technik

Die EP 1 975 441 A2 beschreibt ein Motorrad mit Schaltgetriebe, bei dem die Kupplung gesteuert eingekuppelt wird, um nach einem Schaltvorgang die Drehmomente von Motor langsam aneinander anzugleichen.

Die WO 2018/221464 A1 beschreibt einen Anfahrassistenten, der bei Anfahren nach dem Einlegen eines Gangs mittels eines Elektromotors den Verbrennungsmotor bei der Beschleunigung unterstützt. Siehe auch EP 2 713 079 A1 als gattungsgemässes Verfahren zum Schalten eines Zweirads mit Betätigung einer Kupplung, Detektion eines Gangwechsels durch eine Sensoreinheit und Erfassen einer Fahrzeuglängsgeschwindigkeit.

### Offenbarung der Erfindung

Wird bei Zweiräder wie beispielsweise Motorrädern zwischen den Gängen geschalten, wobei die Kupplung betätigt werden muss, fällt die Drehzahl beim Auskuppeln in Richtung Leerlaufdrehzahl ab und wird nach dem Schaltvorgang entweder durch Zwischengas seitens des Fahrers oder durch Einkuppeln wieder auf die neue Triebstrangdrehzahl synchronisiert.

Die Erfindung betrifft einen Schaltassistenten für ein Motorrad mit manueller Schaltung und Kupplung. Dabei wird die Motordrehzahl über die Motorsteuerung nach einlegen des neuen Gangs in Abhängigkeit von der Reisegeschwindigkeit und dem Übersetzungsverhältnis so gesteuert, dass die Rotationsgeschwindigkeiten von Kupplungseingang und Motorausgang übereinstimmen. Ein Schaltassistent ermöglicht es, bei voller Last ohne Kupplungsbetätigung die Gänge zu wechseln. Das hat den Vorteil, dass Schaltvorgänge verkürzt werden können, ein Schaltruck verhindert und Fahrsicherheit und Fahrkomfort erhöht werden können.

Zeichnungen.
Figur 1 zeigt ein erfindungsgemäßes Verfahren.
Figur 2 zeigt zwei Ansichten mit verschiedenen Drehzahlen.

### Beschreibung

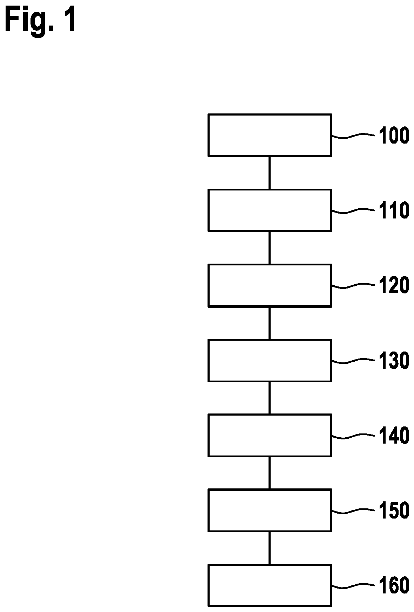

Figur 1 zeigt ein erfindungsgemäßes Verfahren. Im Verfahrensschritt 100 wird die Kupplung eines Zweirades, insbesondere eines Motorrads betätigt.

In 110 wird beim Öffnen der Kupplung ein modelliertes Verlustmoment der Brennkraftmaschine vorgesteuert, um ein Absinken der Drehzahl Richtung Leerlaufdrehzahl zu verhindern.

Im Getriebe des Zweirads ist eine Senoreinheit angeordnet. Die Sensoreinheit ist als Gangsensor ausgebildet.

In 120 detektiert der Gangsensor einen Gangwechsel und sendet ein Signal an ein Motorsteuergerät des Zweirads.

In 130 wird die Fahrzeuglängsgeschwindigkeit erfasst und in 140 in Abhängigkeit der Fahrzeuglängsgeschwindigkeit und des zum Gang passenden Triebstrang-Übersetzungsverhältnisses die Drehzahl am Kupplungsausgang berechnet.

Die errechnete Drehzahl wird in 150 als Sollwert an eine Drehzahlregelung in der Motorsteuerung gegeben.

In 160 wird die Motordrehzahl eingangsseitig der Kupplung auf die errechnete Drehzahl eingestellt. Somit erfolgt das folgende Schließen der Kupplung ruckfrei und verschleißarm. Dadurch wird sowohl der Fahrkomfort erhöht, also auch der Verschleiß der Kupplung massiv reduziert.

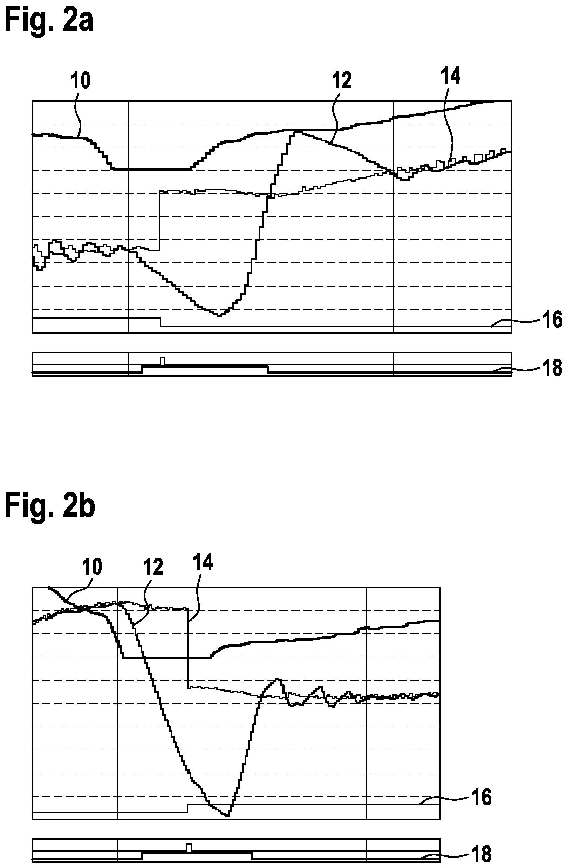

Figur 2 zeigt zwei Ansichten mit verschiedenen Drehzahlen.

In Figur 2a sind die Verläufe folgender Drehzahlen gezeigt, wenn der Fahrer des Zweirads Zwischengas gibt:

| | |
|---|---|
| 10 | - Fahrerwunsch |
| 12 | - Motordrehzahl |
| 14 | - modellierte Drehzahl Kupplungsausgang |
| 16 | - Gang |
| 18 | - Kupplungssignal |

In Figur 2b sind die Verläufe der Drehzahlen gezeigt, mit Schaltassistent, wenn der Fahrer des Zweirads erfindungsgemäß kein Zwischengas gibt.

### Drehzahlverläufe

| | |
|---|---|
| 10 | - Fahrerwunsch |
| 12 | - Motordrehzahl |
| 14 | - modellierte Drehzahl Kupplungsausgang |
| 16 | - Gang |
| 18 | - Kupplungssignal |

## Patentansprüche

1. Verfahren zum Schalten eines Zweirads mit zumindest folgenden Schritten:
• Betätigung (100) einer Kupplung eines Zweirades, insbesondere eines Motorrads,
• Vorsteuerung (110) eines Verlustmoments einer Brennkraftmaschine beim Öffnen der Kupplung,
• Detektion (120) eines Gangwechsels durch eine Sensoreinheit
• Senden eines Sensorsignals an ein Motorsteuergerät,
• Erfassen (130) einer Fahrzeuglängsgeschwindigkeit,
• Berechnung (140) der Drehzahl am Kupplungsausgang in Abhängigkeit der Fahrzeuglängsgeschwindigkeit und des zum Gang passenden Triebstrang-Übersetzungsverhältnisses.

2. Verfahren nach Anspruch 1, **dadurch gekennzeichnet, dass** die errechnete Drehzahl als Sollwert an eine Drehzahlregelung in der Motorsteuerung gegeben (150) wird.

3. Verfahren nach Anspruch 2, **dadurch gekennzeichnet, dass** die Motordrehzahl eingangsseitig der Kupplung auf die errechnete Drehzahl eingestellt (160) wird.

4. Vorrichtung eingerichtet zur Durchführung des Verfahrens nach den Ansprüchen 1 bis 3 mit einem Zweirad, und mit einem im Getriebe des Zweirads angeordneten Sensoreinheit.

## Claims

1. Method for shifting gears in a two-wheeled vehicle, comprising at least the following steps:
• actuating (100) a clutch of a two-wheeled vehicle, in particular a motorcycle,
• pre-controlling (110) a loss torque of an internal combustion engine when opening the clutch,
• detecting (120) a gear change using a sensor unit,
• transmitting a sensor signal to an engine control unit,
• detecting (130) a longitudinal speed of the vehicle,
• calculating (140) the rotation speed at the clutch output as a function of the longitudinal speed of the vehicle and the drive train transmission ratio appropriate to the gear.

2. Method according to Claim 1, **characterized in that** the calculated rotation speed is passed (150) to a rotation speed regulator in the engine controller.

3. Method according to Claim 2, **characterized in that** the engine rotation speed is adjusted (160) to the calculated rotation speed at the input end of the clutch.

4. Device designed for carrying out the method according to Claims 1 to 3 with a two-wheeled vehicle, and with a sensor unit arranged in the gearbox of the two-wheeled vehicle.

## Revendications

1. Procédé de changement de vitesse d'un deux-roues, comprenant au moins les étapes suivantes :
- actionnement (100) d'un embrayage d'un deux-roues, en particulier d'une motocyclette,
- précommande (110) d'un couple de perte d'un moteur à combustion interne lors de l'ouverture de l'embrayage,
- détection (120) d'un changement de vitesse par une unité formant capteur,
- envoi d'un signal de capteur à une unité de commande du moteur,
- détection (130) d'une vitesse longitudinale du véhicule,
- calcul (140) de la vitesse de rotation en sortie d'embrayage en fonction de la vitesse longitudinale du véhicule et du rapport de démultiplication de la chaîne cinématique adapté au rapport de vitesse.

2. Procédé selon la revendication 1, **caractérisé en ce que** la vitesse calculée est donnée (150) en tant que valeur de consigne à un moyen de régulation de vitesse dans la commande du moteur.

3. Procédé selon la revendication 2, **caractérisé en ce que** la vitesse de rotation du moteur est réglée (160) à l'entrée de l'embrayage sur la vitesse de rotation calculée.

4. Dispositif conçu pour mettre en oeuvre le procédé selon les revendications 1 à 3 avec un véhicule à deux roues et avec une unité formant capteur disposée dans la transmission du véhicule à deux roues.
